# EUROPÄISCHE PATENTSCHRIFT

(11) **EP 0 728 053 B1**
(45) Veröffentlichungstag und Bekanntmachung des Hinweises auf die Patenterteilung: **25.02.1998**
(21) Anmeldenummer: 94931571.7
(22) Anmeldetag: 07.11.1994
(51) Int. Cl.: B23K 1/018

(54) **VORRICHTUNG ZUM BEWEGEN EINES GEGENSTANDS MITTELS THERMISCHER FORM- BZW. VOLUMENÄNDERUNG**
DEVICE FOR MOVING AN OBJECT BY MEANS OF THERMAL CHANGE IN SHAPE OR VOLUME
DISPOSITIF SERVANT A DEPLACER UN OBJET PAR CHANGEMENT THERMIQUE DE FORME OU DE VOLUME

(30) Priorität: 08.11.1993 DE 4338094
(43) Veröffentlichungstag der Anmeldung: 28.08.1996
(73) Patentinhaber: LEICHT, Helmut, Walter, D-86343 Königsbrunn (DE)
(72) Erfinder: LEICHT, Helmut, Walter, D-86343 Königsbrunn (DE)
(74) Vertreter: VOSSIUS & PARTNER
(86) Internationale Anmeldenummer: EP9403645
(87) Internationale Veröffentlichungsnummer: WO9513161

(56) Entgegenhaltungen:
- DE-A- 2 548 990
- DE-A- 3 532 944
- FR-A- 2 200 730

## Beschreibung

Die Erfindung betrifft eine Vorrichtung (Manipulator) zum Bewegen eines Gegenstands mittels thermischer Form- bzw. Volumenänderung, die den Gegenstand beim Erreichen einer vorbestimmten Prozeßtemperatur bewegt. Vorzugsweise in Wärmeöfen besteht Bedarf für ein Manipulatorsystem, das es ermöglicht, nach Erreichen einer bestimmten Temperatur ein Körper zu einem anderen Körper hin- oder von ihm wegzubewegen. Insbesondere bei höheren Temperaturen sind meist aufwendige Vorrichtungen notwendig, um ein sicheres Handling der Körper zu gewährleisten

Ein Beispiel dafür stellen Lötverbindungen in der Elektronik dar. Durch die heute erreichte Miniaturisierung der Bauelemente und die Sensibilität der Leiterplattenmaterialien wird es immer schwieriger, defekte oder falsch eingesetzte Bauelemente von einer Leiterplatte zu entlöten. Es besteht immer die Gefahr einer Beschädigung der Leiterplatte oder des Bauelements.

Bei der Reparatur von Bauelementen wird mit mehr oder weniger aufwendigen und qualitativ oft unzureichenden Vorrichtungen gearbeitet. Dadurch treten hohe Kosten auf, und Schäden an Baugruppen sind nicht zu vermeiden. Im wesentlichen kommen im Stand der Technik folgende Reparaturlötverfahren zum Einsatz:
- Hand-Entlötkolben,
- Heißluftunterstützte Entlötkolben,
- Heißluft-Reparaturlöststationen mit verschiedenen Düseneinsätzen,
- Bügel-Entlöten, siehe z.B. DE-A1-3 532 944,
- IR-Entlöten und
- Dampfphasen-Entlöten.

Das Dampfphasen-Entlöten bringt erhebliche Vorteile mit sich. Aber auch bei diesem Verfahren sind die zum Abheben der Bauelemente benötigten Vorrichtungen relativ aufwendig. Das Hauptproblem ist der Zeitpunkt der Entlötung. Wenn sichergestellt werden soll, daß keine Leiterbahnzüge oder das Bauelement beschädigt werden, darf die Abzugskraft auf das Bauelement erst nach dem Schmelzen des Lotes einwirken.

Unabhängig von der Art des Entlötverfahrens, das man wählt, besteht immer das Problem, daß das Lot an allen Verbindungen zwischen dem Bauelement und der Leiterplatte geschmolzen sein muß, um eine Beschädigung der Leiterbahnzüge oder des Bauelementes zu vermeiden.

Es fehlt ein System, das einerseits in und durch den Wärmeofen fahren kann, und andererseits aber das Bauelement selbständig erst dann abhebt, wenn das Lot geschmolzen ist.

Demgegenüber liegt der Erfindung die Aufgabe zugrunde, eine Vorrichtung zur Verfügung zu stellen, die insbesondere zum Entlöten von elektronischen Bauelementen eingesetzt werden, einfach in der Handhabung ist, zuverlässig arbeitet und weder die Baugruppe noch das Bauelement beschädigt. Vorzugsweise soll die Vorrichtung so klein sein, daß sie z.B. direkt auf eine Leiterplatte gesetzt werden kann, mit einem zu entlötenden Bauelement verbunden wird und nach einer bestimmten Temperatur das Bauelement von der Leiterplatte abhebt.

Die Aufgabe wird mit den Merkmalen der Patentansprüche gelöst.

Bei der Lösung geht die Erfindung von dem Grundgedanken aus, eine Vorrichtung zur Verfügung zu stellen, bei der eine temperaturabhängige Form- bzw. Volumenänderung auftritt und die mit einem zu bewegenden Gegenstand z.B. einem Bauelement auf einer Leiterplatte verbunden ist. Beim Erreichen einer vorbestimmten Temperatur bewirkt die Form- bzw. Volumenänderung, daß der Gegenstand bewegt wird. Die Vorrichtung kann aus einem Bimetall, einem Metall mit Formerinnerung (Memory-Effekt) oder einem Faltenbalg oder einem Zylinder mit Kolben, die mit einem Fluid (Flüssigkeit und/oder Gas) oder Festkörper gefüllt sind, die sich bei Temperaturerhöhung ausdehnen, bestehen.

Der Vorteil der Erfindung liegt in einer temperaturgesteuerten Bewegung eines Gegenstandes mit hoher Genauigkeit, die ohne zusätzliche Einwirkung von außen nur durch die Prozeßtemperatur im Inneren einer Wärmebehandlungseinrichtung bewirkt wird.

Im folgenden wird die Erfindung anhand der einzigen Zeichnung näher erläutert. Es zeigt:

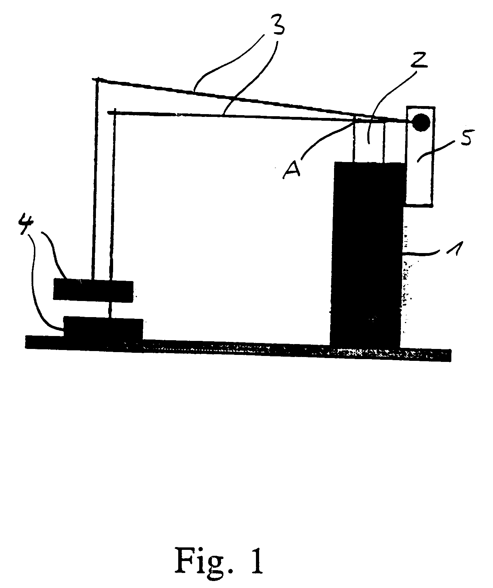

- Fig. 1: ein Prinzipbild einer erfindungsgemäßen Ausführungsform.

Fig. 1 stellt eine erfindungsgemäße Ausführungsform dar, bei der die Volumenänderung eines Fluids oder Festkörpers in einem Zylinder, der durch einen in ihm beweglichen Kolben 2 abgedichtet ist, verwendet wird. An dem Zylinder 1 ist in einer Halterung 5 ein Gestänge 3 gelenkig gelagert, das auf dem Kolben 2 aufsitzt und mit einem Gegenstand 4 verbunden ist. Durch die Volumenänderung des Zylinderinneren beim Erreichen einer bestimmten Temperatur wird der Kolben 2 aus einer Anfangsstellung A mit dem Gestänge 3 nach oben bewegt. Dabei wird der Gegenstand 4 (z.B. ein Bauelement) von einer Unterlage (z.B. von einer Leiterplatte) abgehoben. Je nach gewünschter Volumenänderung und Arbeitstemperatur können verschiedene Medien für die Volumenausdehnung zum Einsatz kommen. Wenn ein großer Hub gefordert wird, der erst bei einer bestimmten Temperatur auftritt, kann z.B. eine Flüssigkeit gewählt werden, die einen Siedepunkt von z.B. 190°C besitzt. Erst nach Erreichen der Siedetemperatur erfolgt, je nach Flüssigkeitsmenge, eine erhebliche Volumenänderung, die einen starken Druck erzeugt. Dadurch wird der Kolben durch den Dampfdruck in seinen oberen Totpunkt transportiert. Nach Unterschreiten der Siedepunkts wird der Kolben durch den entstehenden Unterdruck in seine Ausgangslage zurückgeschoben. Da der Unterdruck in der Regel allein nicht ausreicht, den Kolben in seine Ausgangslage zurückzuführen, kann diese Bewegung z.B. durch externe Kräfte (Federn oder Gewicht) unterstützt werden. Die Formänderung (Bimetall, Metall mit Formänderung) bzw. die Volumenänderung in einem Zylinder oder Faltenbalg kann auch direkt ohne Vermittlung (z.B. über ein Gestänge) an einem Gegenstand angreifen und diesen bewegen.

Bei der Verwendung in der Dampfphasenlöttechnik wird die Vorrichtung z.B. auf eine zu reparierende Leiterplatte aufgesetzt und ein Manipulatorarm (Gestänge) 3 mit einem zu entlötenden Bauelement verbunden. Die Leiterplatte fährt in die Dampfphase ein. Dabei erwärmt sich die Leiterplatte zuerst und das Lot der Bauelementverbindung schmilzt (z.B. Sn63Pb37 bei 183°C). Nachdem die Vorrichtung (Manipulator) auf 190°C erwärmt ist, wird der Zylinder durch Volumenänderung in seine obere Totposition gebracht und das Bauelement absolut schonend und zuverlässig abgehoben. Nach dem Abkühlen der Baugruppe hängt das Bauelement am Manipulator und kann sogar wiederverwendet werden.

Die erfindungsgemäße Vorrichtung kann in beliebigen Wärmeübertragungsräumen eingesetzt werden. Die Materialien für die thermische Form- bzw. Volumenänderung müssen dann so gewählt werden, daß eine Bewegung bei einer bestimmten Temperatur erreicht wird.

Die Erfindung kommt vorzugsweise bei einem Entlötprozeß zum Einsatz. Sie kann aber als temperaturgesteuerter Schalter, als Baustein in einem Transportsystem oder als temperaturgesteuertes Dosiergerät zum Einsatz kommen.

Bei einem Dosiergerät kann die Vorrichtung mit einem Deckel verbunden sein, der temperaturabhängig geöffnet oder geschlossen wird.

Die Vorrichtung kann auch mit einem Dichtmaterial verbunden sein und eine temperaturgesteuerte Abdichtung bewirken.

## Patentansprüche

1. Vorrichtung zum Bewegen eines Gegenstandes beim Entlöten oder Einlöten mittels thermischer Form- bzw. Volumenänderung beim Erreichen einer bestimmten Prozeßtemperatur, mit einem geschlossenen Behälter (1), der mit einem Fluid gefüllt ist, oder mit einem Festkörper, deren freies Ende (2) mit dem Gegenstand (4) verbunden ist, wobei unter Temperatureinfluß das Volumen des Fluids oder Festkörpers vergrößert, das Ende (2) des Behälters (1) bzw. Festkörpers aus einer Anfangsstellung (A) gedrückt und der Gegenstand (4) bewegt wird.

2. Vorrichtung nach Anspruch 1, dadurch gekennzeichnet, daß der Behälter (1) ein Faltenbalg ist.

3. Vorrichtung nach Anspruch 1, dadurch gekennzeichnet, daß
(a) der Behälter ein Zylinder (1) ist, in dem ein Kolben (2) bewegbar ist, und
(b) der Kolben auf ein Gestänge (3) einwirkt, das mit dem Gegenstand (4) verbunden ist.

4. Vorrichtung nach Anspruch 3, dadurch gekennzeichnet, daß das Gestänge (3) an dem Zylinder (1) in einer Halterung (5) gelenkig gehaltert ist.

5. Vorrichtung nach einem der Ansprüche 3 oder 4, dadurch gekennzeichnet, daß der Kolben (2) gegen eine Kraft bewegbar ist, die den Kolben (2) bei einer Verringerung des Volumen des Fluids in die Anfangsstellung (A) zurückführt.

6. Verwendung der Vorrichtung nach einem der Ansprüche 1 bis 5, dadurch gekennzeichnet, daß sie auf einer Leiterplatte befestigt ist und beim Entlöten ein Bauelement von der Leiterplatte abhebt.

## Claims

1. A device for moving an object during unsoldering or soldering by means of thermal change in shape or volume when a predetermined process temperature has been reached, comprising a closed container (1) filled with a fluid or a solid body, whose free end (2) is connected with the object (4), wherein, under the influence of the temperature, the volume of the fluid or solid body is increased the end (2) of the container (1) or solid body is pushed from a starting position (A), and the object (4) is moved.

2. The device according to claim 1, characterized in that the container (1) constitutes bellows.

3. The device according to claim 1, characterized in that
(a) the container is a cylinder (1) in which a piston (2) is movable, and
(b) the piston acts upon rods (3) which are connected with the object (4).

4. The device according to claim 3, characterized in that the rods (3) are hinged at the cylinder (1) in a holding device (5).

5. The device according to any one of claims 3 or 4, characterized in that the piston (2) is movable against a force which moves the piston (2) back into the initial position (A) when the volume of the fluid is reduced.

6. The use of the device according to any one of claims 1 to 5, characterized in that it is fixed on a printed circuit board and removes a component from the printed circuit board during unsoldering.

## Revendications

1. Dispositif pour le déplacement d'un objet lors du dessoudage ou du soudage au moyen de la modification thermique de forme ou de volume dès qu'une température de procédé déterminée est atteinte, avec un réservoir fermé (1), qui est rempli d'un fluide ou d'un corps solide, dont l'extrémité libre (2) est raccordée à l'objet (4), le volume du fluide ou du corps solide grossissant sous l'effet de la température, l'extrémité (2) du récipient (1) ou du corps solide étant comprimée à partir d'une position de départ (A) et l'objet (4) étant déplacé.

2. Dispositif selon la revendication 1, caractérisé en ce que le récipient (1) est un soufflet.

3. Dispositif selon la revendication 1, caractérisé en ce que
(a) le récipient est un cylindre (1) dans lequel peut se déplacer un piston (2), et
(b) le piston agit sur une tringlerie (3) qui est raccordée à l'objet (4).

4. Dispositif selon la revendication 3, caractérisé en ce que la tringlerie (3) est maintenue en articulation sur le cylindre (1) dans un logement (5).

5. Dispositif selon l'une des revendications 3 ou 4, caractérisé en ce que le piston (2) est déplaçable en opposition à une force qui ramène le piston (2) lors d'une réduction de volume du fluide dans la position de départ (A).

6. Utilisation du dispositif selon l'une des revendications 1 à 5, caractérisée en ce qu'il est fixé sur une plaquette de circuits imprimés et soulève lors du dessoudage un composant de la plaquette de circuits imprimés.
